# EUROPEAN PATENT APPLICATION

(11) **EP 1 662 115 A1**
(43) Date of publication of application: **31.05.2006**
(21) Application number: 04708921.4
(22) Date of filing: 06.02.2004
(51) Int. Cl.: F02C 6/00, F02C 7/08, F02G 5/02

(54) **COGENERATION SYSTEM**

(30) Priority: 22.08.2003 JP 2003299131
(71) Applicant: TAKUMA CO., LTD., Osaka-shi, Osaka 530-0004 (JP)
(72) Inventor: KISHIDA, Hiroyuki, c/o Takuma Co., Ltd, Kyoto-shi, Kyoto 601-8205 (JP); SHIRAGAKI, Mamoru, c/o Takuma Co., Ltd, Kyoto-shi, Kyoto 601-8205 (JP); SHIBATA, Satoshi, c/o Takuma Co., Ltd, Kyoto-shi, Kyoto 601-8205 (JP)
(74) Representative: Strehl Schübel-Hopf & Partner
(86) International application number: PCT/JP2004/001307
(87) International publication number: WO 2005/019622

(57) **Abstract**

A cogeneration system is provided which is capable of reliably switching a bypass damper even if a supply of electric power is shut off in an abnormal state etc. and which is unlikely to leak exhaust gas and is cost-effective even if it is increased in size. To this end, an exhaust gas path (10) for introducing exhaust gas from a gas turbine (2) into an exhaust-heat-recovery heat exchanger (8) is provided with a bypass path (11) and an inlet of the bypass path (11) is provided with a bypass damper (12) which is controlled so as to be opened and closed by an air cylinder driven by compressed air from the compressor (3).

## Description

### Technical Field

The present invention relates to a cogeneration system (heat/electricity joint supplying system) for supplying electric power and hot water or the like at the same time, using a gas turbine generator and an exhaust-heat-recovery heat exchanger in combination.

### Background Art

There have been known and practically used cogeneration systems (heat/electricity joint supplying systems) which generate electric power by a gas turbine generator and generate hot water etc. by recovering the heat of high-temperature exhaust gas from the gas turbine with an exhaust-heat-recovery exchanger. Of the systems of this type, systems having a relatively small capacity of about 15 to 300 KW are utilized as a micro gas turbine cogeneration system (see Japanese Patent Published Unexamined Application No. 2002-4945).

In one known cogeneration system of the above type, an exhaust gas path for introducing the exhaust gas of the gas turbine into the exhaust-gas-recovery heat exchanger is provided with a bypass path and when the demand for heat becomes nil with the demand for electric power existing, a bypass damper provided for the inlet of the bypass path is switched, thereby introducing the exhaust gas of the gas turbine into the bypass path to release it to the atmosphere through an exhaust flue, so that the gas turbine can be operated without stopping to continue electric power generation. In this system, the bypass damper is driven directly by the driving force of an electric motor or alternatively driven through a link mechanism. Usually, the electric motor for driving the bypass damper is actuated by the output of the gas turbine generator or electric power obtained from the internal power of the gas turbine.

The cogeneration systems provided with the bypass damper are designed to stop the gas turbine while the system is brought to a stop after shifting the bypass damper to the bypass path side. However, the systems designed to drive the bypass damper with an electric motor like the above conventional system suffers from the problem that the bypass damper cannot be shifted if a supply of electric power to the electric motor is shut off, for instance, when an abnormality arises.

In the conventional systems of this type, after the bypass damper is switched and placed at a specified position, control is performed such that a limit switch or the like is operated to cut off the power source of the motor in order to prevent burnout of the motor windings. These systems, however, present the drawback that since the motor shaft is not completely fixed, a clearance is created between the valve disc and the valve sheet by the wind force of exhaust gas, the elasticity of the bypass damper or the like, resulting in a leakage of exhaust gas.

In the above conventional systems, as the bypass damper increases in size, the torque required to operate the damper increases, so that there arises a need for a large-sized electric motor, which inevitably leads to increased cost.

The present invention is directed to overcoming the foregoing problems and a primary object of the invention is therefore to provide a cogeneration system which is capable of reliably switching a bypass damper even if a supply of electric power is shut off in an abnormal state etc. and which is unlikely to leak exhaust gas and is cost-effective even if the size of the system is increased.

### Disclosure of the Invention

In accomplishing the above object, there has been provided, in accordance with the present invention, a cogeneration system having a compressor for pressurizing combustion air; a combustion chamber for burning a fuel with the combustion air pressurized by the compressor; a gas turbine for converting fuel gas discharged from the combustion chamber into rotational energy; a generator for generating electric power from the rotational energy of the gas turbine; and an exhaust-heat-recovery heat exchanger for recovering the heat of exhaust gas from the gas turbine,
wherein an exhaust gas path for introducing the exhaust gas from the gas turbine into the exhaust-heat-recovery heat exchanger is provided with a bypass path and an inlet of the bypass path is provided with a bypass damper which is controlled so as to be opened and closed by an air cylinder driven by compressed air from the compressor.

According to the invention, since the bypass damper provided for the inlet of the bypass path is controlled so as to be opened and closed by the air cylinder driven by compressed air fed from the compressor, the bypass damper can be always switched to a proper direction by making use of the compressed air even if a supply of electric power is cut off in an abnormal state or the like. Therefore, troubles due to the bypass damper which becomes unswitchable can be avoided. In addition, since the bypass damper can be constantly pressed in a specified direction unlike the systems which use an electric motor, the problem of leakage of exhaust gas can be overcome. Even if the system of the invention uses a large-sized bypass damper, the peripheral devices do not change in size although the air cylinder body becomes slightly large and therefore the system of the invention can be manufactured at lower cost compared to the systems which use an electric motor.

In the invention, there are provided, within an air pressure circuit extending from the compressor to the air cylinder, a check valve for preventing the compressed air from flowing back to the side of the compressor; an accumulator for temporally accumulating the compressed air; and a direction control valve for switching the direction of the compressed air supplied to the air cylinder.

In the above arrangement, use of the check valve reliably prevents a reverse flow of the compressed air even in the case of an emergency stop of the gas turbine etc. Use of the accumulator ensures a sufficient amount of air for driving the air cylinder, even when the pressure of the compressed air from the compressor is insufficient, for instance, in the case of an emergency stop of the gas turbine.

Preferably, the direction control valve is an electromagnetic selector valve and when the electromagnetic selector valve is de-energized, the bypass damper is operated to close a path on the side of the exhaust-heat-recovery heat exchanger and open the bypass path.

Thus, even if the direction control valve for switching the direction of the compressed air to be supplied to the air cylinder is de-energized, the bypass damper can be switched to a safe direction to close the path on the side of the exhaust-heat-recovery heat exchanger and to open the bypass path, so that the reliability of the system can be more increased.

### Brief Description of the Drawings.

Fig. 1 is a system structural diagram of a micro gas turbine cogeneration system according to one embodiment of the invention.
Fig. 2 is a circuit diagram of an air cylinder driving circuit for driving a bypass damper.
Fig. 3 is a circuit diagram of an air cylinder driving circuit according to another embodiment.
Fig. 4 is a circuit diagram of an air cylinder driving circuit according to still another embodiment.

### Best Mode for Carrying out the Invention

Referring now to the accompanying drawings, concrete embodiments of the invention will be described.

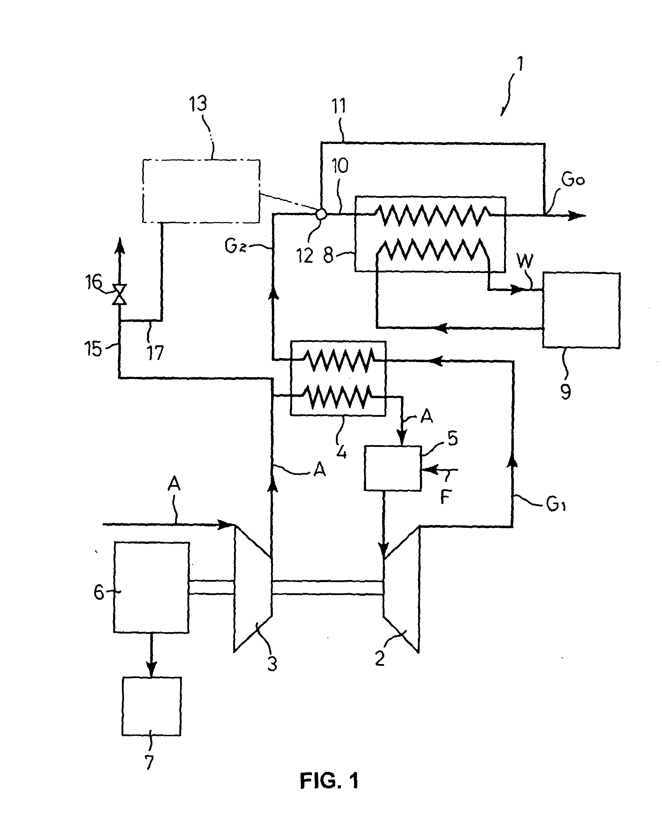

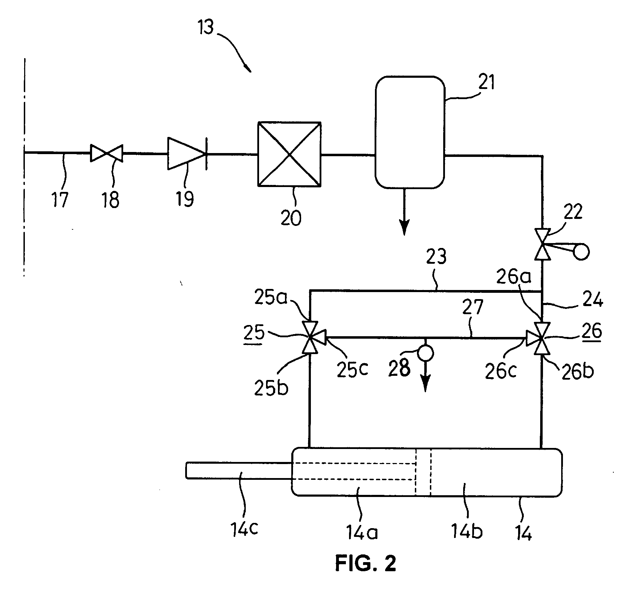

Fig. 1 shows a system structural diagram showing a micro gas turbine cogeneration system constructed according to one embodiment of the invention. Fig. 2 shows a circuit diagram of an air cylinder driving circuit for driving a bypass damper.

In the cogeneration system 1 of the first embodiment, combustion air A is supplied to and pressurized by a compressor 3 directly connected to a gas turbine 2 and then, supplied to a combustion chamber 5 through a recuperator 4. In the recuperator 4, the combustion air (compressed air) A is heat-exchanged with an outlet gas (high-temperature exhaust gas) G₁ of the gas turbine 2, whereby the combustion air A is preheated. In the combustion chamber 5, the combustion air A preheated by the recuperator 4 and a fuel gas F to be supplied to the combustion chamber 5 are mixed and burnt so that high-temperature combustion gas is generated. The high-temperature combustion gas is introduced into the gas turbine 2 and converted into rotational energy. The rotational energy in turn drives the compressor 3 and a generator 6 coupled to the compressor 3, and electric power is taken out from an electric load 7.

The high-temperature exhaust gas G₁ of the gas turbine 2 is sent to the recuperator 4. In the recuperator 4, the high-temperature exhaust gas G₁ is heat-exchanged with the combustion air A, thereby generating a turbine exhaust gas G₂. This turbine exhaust gas G₂ is introduced into an exhaust-heat-recovery heat exchanger 8, generating hot water W and then released to the atmosphere as an exhaust gas G₀. The hot water W thus generated is taken out from a heat load 9.

An exhaust gas path 10 for the turbine exhaust gas G₂ which is sent from the gas turbine 2 to the exhaust-heat-recovery heat exchanger 8 through the recuperator 4 is provided with a bypass path 11 for bypassing the exhaust-heat-recovery heat exchanger 8 and the inlet of the bypass path 11 is provided with a bypass damper 12. The bypass damper 12 is switched so as to introduce the turbine exhaust gas G₂ to the bypass path 11 side at the time such as when the demand for heat becomes nil with the demand for electric power existing. Thereby, the gas turbine 2 is not stopped and electric power generation can be continued.

In the cogeneration system 1 of this embodiment, the compressed air (combustion air A) from the compressor 3 is used for opening and closing the bypass damper 12. This compressed air is supplied to an air cylinder 14 through an air cylinder driving circuit 13, and the bypass damper 12 is opened and closed, being controlled through the expansion and contraction of the air cylinder 14. Hereinafter, the configuration of the air cylinder driving circuit 13 will be described in detail.

In Fig. 1, the combustion air A from the compressor 3 is divergently supplied to a lead-out path 15. The lead-out path 15 is provided with an emergency damp valve 16 which is usually closed. Connected to a section immediately upstream the emergency damp valve 16 is a branch path 17 which is connected to the air cylinder driving circuit 13. The downstream side of the emergency damp valve 16 is connected to a silencer (not shown) or opened to the atmosphere. If an abnormality arises in the gas turbine 2, the emergency damp valve 16 is opened, releasing air pressure to the atmosphere.

As shown in Fig. 2, the branch path 17, into which the compressed air of the compressor 3 is introduced, is composed of a normally-opened electromagnetic valve (this valve is not limited to an electromagnetic valve) 18; a check valve 19; a speed control valve (speed controller) 20 consisting of a needle valve; and an accumulator 21 which are disposed in this order from the upstream side. The compressed air is accumulated in the accumulator 21 after passing through the electromagnetic valve 18, the check valve 19 and the speed control valve 20. It should be noted that the electromagnetic valve 18 is closed during the maintenance of the air cylinder driving circuit 13. The check valve 19 is used for maintaining the pressure within the accumulator 21 if the pressure within the compressor 3 drops when the emergency damp valve 16 is opened in the case of an emergency stop of the gas turbine 2 etc. The speed control valve 20 is provided for maintaining the flow rate of air to be constant and gradually increasing air pressure within the accumulator 21 in order to prevent the gas turbine 2 from being adversely affected by a rapid flow of air from the compressor 3 to the accumulator 21 when the air cylinder 14 is brought into operation. The capacity of the accumulator 21 is large enough to retain a sufficient amount of air for driving the air cylinder 14 at least once even if the air pressure of the compressor 3 is not enough in the case of, for instance, an emergency stop of the gas turbine 2. To drain a liquid from the accumulator 21 which liquid is generated by a drop in temperature, the accumulator 21 is connected to an automatic drain separator (not shown).

On the downstream side of the accumulator 21, the branch path 17 diverges into two directions after passing a regulator 22 which functions to prevent pressure fluctuations, so that a bottom side path 23 and a head side path 24 which extend to the air cylinder 14 are formed. The bottom side path 23 and the head side path 24 are connected to a bottom side chamber 14a and head side chamber 14b of the air cylinder 14 through a first electromagnetic three-way selector valve 25 and a second electromagnetic three-way selector valve 26, respectively. The three-way selector valves 25, 26 are connected to each other through an exhaust path 27 which is in turn connected to a silencer (not shown) through an orifice 28 or opened to the atmosphere.

More specifically, the first three-way valve 25 includes a compressor side port 25a; an air cylinder side port 25b; and an exhaust path side port 25c. The exhaust path side port 25c is closed to make the compressor side port 25a communicate with the air cylinder side port 25b, whereby the compressed air is introduced into the bottom side chamber 14a of the air cylinder 14. And, the compressor side port 25a is closed to make the air cylinder side port 25b communicate with the exhaust path side port 25c, whereby the compressed air within the bottom side chamber 14a of the air cylinder 14 is released to the atmosphere through the exhaust path 27 and the orifice 28. Similarly, the second three-way selector valve 26 includes a compressor side port 26a; an air cylinder side port 26b and an exhaust path side port 26c. The exhaust path side port 26c is closed to make the compressor side port 26a communicate with the air cylinder side port 26b, whereby the compressed air is introduced into the head side chamber 14b of the air cylinder 14. In addition, the compressor side port 26a is closed to make the air cylinder side port 26b communicate with the exhaust path side port 26c, whereby the compressed air within the head side chamber 14b of the air cylinder 14 is released to the atmosphere through the exhaust path 27 and the orifice 28.

The bypass damper 12 is driven through a link mechanism (not shown) for converting the linear movement of a rod 14c of the air cylinder 14 into rotational movement. In this embodiment, when the rod 14c is expanded, the bypass path 11 is closed so that the turbine exhaust gas G₂ is introduced into the exhaust gas path 10 side. When the rod 14c is contracted, the bypass path 11 is opened so that the turbine exhaust gas G₂ is introduced into the bypass path 11 side.

Next, the operation of the air cylinder driving circuit 13 having the above-described configuration will be explained.

When the three-way selector valves 25, 26 are in their de-energized state, the first three-way selector valve 25 closes the exhaust path side port 25c and the compressor side port 25a is in communication with the air cylinder side port 25b, whereas the second three-way selector valve 26 closes the compressor side port 26a and the air cylinder side port 26b is in communication with the exhaust path side port 26c. That is, the rod 14c of the air cylinder 14 is in its contracted state, the bypass path 11 is open, and the exhaust gas path 10 is closed.

If the operation of the system is started from the above condition, the three-way selector valves 25, 26 are held at the above positions and the turbine exhaust gas G₂ is introduced into the bypass path 11 side, until the operation of the gas turbine 2 starts. After an elapse of a specified time required for starting the operation of the gas turbine 2, the three-way selector valves 25, 26 are energized so that the first three-way selector valve 25 closes the compressor side port 25a and the air cylinder side port 25b is communicated with the exhaust path side port 25c, whereas the second three-way selector valve 26 closes the exhaust path side port 26c and the compressor side port 26a is communicated with the air cylinder side port 26b. After passing through the compressor side port 26a and air cylinder side port 26b of the second three-way selector valve 26, the compressed air from the accumulator 21 is introduced into the head side chamber 14b of the air cylinder 14. After passing through the air cylinder side port 25b and exhaust path side port 25c of the first three-way selector valve 25, the compressed air within the bottom side chamber 14a is discharged through the exhaust path 27 and the orifice 28. In this way, the rod 14c of the air cylinder 14 is expanded, the bypass path 11 is closed, and the turbine exhaust gas G₂ is introduced into the exhaust gas path 10 side, so that hot water W is taken out from the heat load 9.

If the demand for heat becomes nil during the above normal operation, the three-way selector valves 25, 26 are de-energized. Thereby, the first three-way selector valve 25 closes the exhaust path side port 25c and the compressor side port 25a is communicated with the air cylinder side port 25b, whereas the second three-way selector valve 26 closes the compressor side port 26a and the air cylinder side port 26b is communicated with the exhaust path side port 26c. As a result, the rod 14c of the air cylinder 14 is contracted so that the bypass path 11 is opened while the exhaust gas path 10 is closed, and the turbine exhaust gas G₂ is introduced into the bypass path 11 side.

When stopping the operation of the system, a stop button for the gas turbine 2 is depressed thereby de-energizing the three-way selector valves 25, 26, so that the rod 14c of the air cylinder 14 is contracted, the bypass path 11 is opened and the exhaust gas path 10 is closed, as described earlier. In this way, the turbine exhaust gas G₂ is introduced into the bypass path 11 during a specified period of time taken for cooling down the gas turbine 2. Therefore, there is no need to let the hot water W flow in the heat load 9 in the course of cooling-down.

If the gas turbine 2 is brought to an emergency stop during operation, the first and second three-way selector valves 25, 26 are operated similarly to the case where the system is stopped. Specifically, the first three-way selector valve 25 closes the exhaust path side port 25c and the compressor side port 25a is communicated with the air cylinder side port 25b. The second three-way selector valve 26 closes the compressor side port 26a and the air cylinder side port 26b is communicated with the exhaust path side port 26c. Even if the pressure of the compressor 3 is insufficient, the rod 14c of the air cylinder 14 is contracted by air pressure accumulated by the accumulator 21, so that the bypass path 11 is opened.

As described above, in the cogeneration system 1 of this embodiment, since the bypass damper 12 is constantly switched to a proper direction by the compressed air from the compressor 3, troubles due to the bypass damper 12 which becomes unswitchable can be prevented. In contrast with the conventional systems in which the bypass damper 12 is driven by an electric motor, this system is designed such that the bypass damper 12 is constantly pressed in a specified direction by compressed air and therefore the problem of leakage of exhaust gas can be solved. Even if the bypass damper 12 is large in size, the peripheral devices such as the three-way selector valves 25, 26 do not change in size although the body of the air cylinder 14 becomes slightly large. Therefore, the system can be manufactured at low cost and is cost-effective compared to the systems which employ an electric motor.

Even if the system of the present embodiment is applied to a stand-alone type cogeneration system which is not systematically connected to a commercial power source, troubles that the bypass damper 12 becomes unswitchable can be avoided, because when the gas turbine 2 is brought to an emergency stop, the three-way selector valves 25, 26 are de-energized thereby operating the air cylinder 14 in a direction to open the bypass path 11.

Although the embodiment described herein has been discussed in the context of the three-way selector valves 25, 26 each consisting of an electromagnetic direction control valve, a spring type direction control valve may be used as the three-way selector valves.

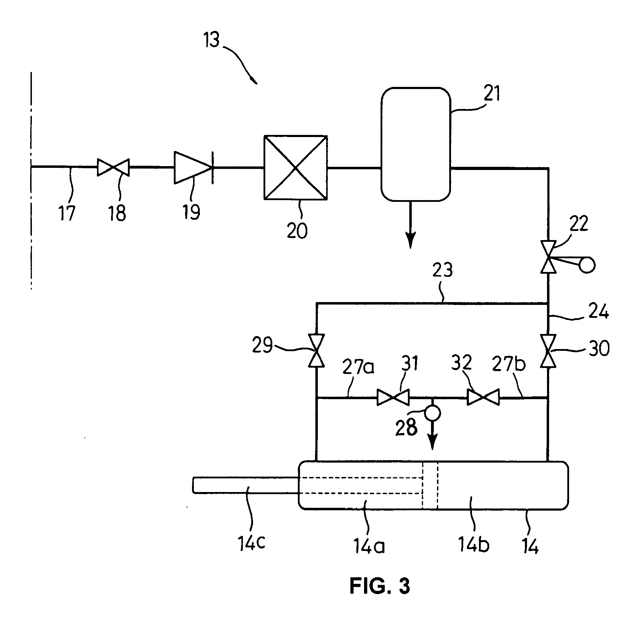

Fig. 3 shows a circuit diagram of an air cylinder driving circuit according to another embodiment.

While the foregoing embodiment is designed such that the bottom side path 23 and head side path 24 of the air cylinder 14 are connected to the bottom side chamber 14a and head side chamber 14b of the air cylinder 14 through the three-way selector valves 25, 26, respectively and that the three-way selector valves 25, 26 are connected to each other through the exhaust path 27, this embodiment is formed as follows: The bottom side path 23 and the head side path 24 are equipped with opening/closing valves 29, 30, respectively, which are switchable between two positions. Additionally, opening/closing valves 31, 32 switchable between two positions are disposed within exhaust paths 27a, 27b respectively, these paths 27a, 27b branching from the air cylinder 14 side of the opening/closing valves 29, 30, respectively. With this arrangement, the same effect as of the foregoing embodiment can be attained.

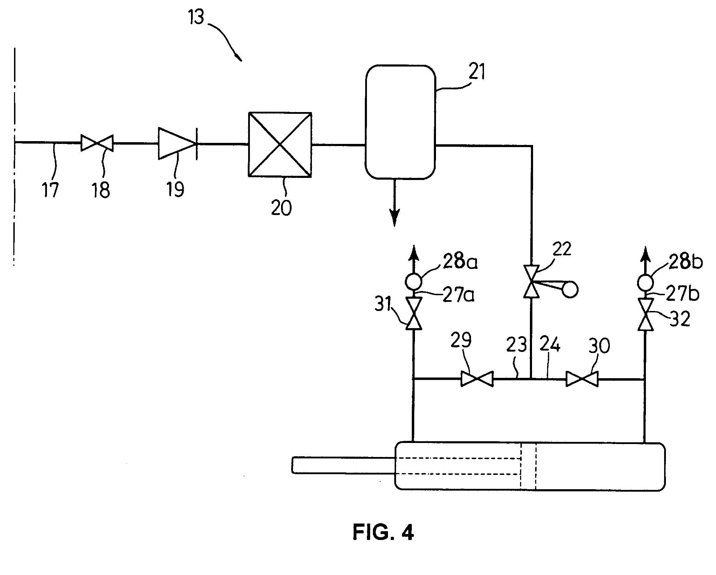

Fig. 4 shows a circuit diagram of an air cylinder driving circuit according to still another embodiment.

In contrast with the foregoing embodiments, this embodiment is formed such that opening/closing valves 31, 32 switchable between two positions are disposed within the exhaust paths 27a, 27b respectively, these paths 27a, 27b branching from the air cylinder 14 side of the opening/closing valves 29, 30, respectively. These exhaust paths 27a, 27b are connected to a silencer through distinct orifices 28a, 28b, respectively or opened to the atmosphere. With this arrangement, the same effect as of the foregoing embodiments can be attained.

## Claims

1. A cogeneration system having a compressor for pressurizing combustion air; a combustion chamber for burning a fuel with the combustion air pressurized by the compressor; a gas turbine for converting fuel gas discharged from the combustion chamber into rotational energy; a generator for generating electric power from the rotational energy of the gas turbine; and an exhaust-heat-recovery heat exchanger for recovering the heat of exhaust gas from the gas turbine,
wherein an exhaust gas path for introducing the exhaust gas from the gas turbine into the exhaust-heat-recovery heat exchanger is provided with a bypass path and an inlet of the bypass path is provided with a bypass damper which is controlled so as to be opened and closed by an air cylinder driven by compressed air from the compressor.

2. The cogeneration system according to claim 1 , further having within an air pressure circuit extending from the compressor to the air cylinder:
a check valve for preventing the compressed air from flowing back to the side of the compressor;
an accumulator for temporally accumulating the compressed air; and
a direction control valve for switching the direction of the compressed air supplied to the air cylinder.

3. The cogeneration system according to claim 2,
wherein the direction control valve is an electromagnetic selector valve and when the electromagnetic selector valve is de-energized, the bypass damper is operated to close a path on the side of the exhaust-heat-recovery heat exchanger and open the bypass path.
